# FASCICULE DE BREVET EUROPEEN

(11) **EP 2 821 595 B1**
(45) Date de publication et mention de la délivrance du brevet: **21.05.2025**
(21) Numéro de dépôt: 13174893.1
(22) Date de dépôt: 03.07.2013
(51) Int. Cl.: F01D 9/04, F01D 25/24

(54) **SECTEUR D'AUBES STATORIQUE À FIXATION MIXTE POUR TURBOMACHINE AXIALE**
STATORSCHAUFELABSCHNITT MIT ABWECHSELNDEN BEFESTIGUNGEN FÜR EINE AXIALE TURBOMASCHINE
STATOR BLADE SECTION WITH MIXED FIXATION FOR AN AXIAL TURBOMACHINE

(43) Date de publication de la demande: 07.01.2015
(73) Titulaire: Safran Aero Boosters SA, 4041 Herstal (BE)
(72) Inventeur: Cortequisse, Jean-François, 3870 Heers (BE)
(74) Mandataire: Ipsilon Benelux

(56) Documents cités:
- EP-A1- 2 339 120
- EP-A2- 2 213 840
- GB-A- 600 057
- GB-A- 644 031
- US-A- 2 772 069
- US-A- 2 997 275
- US-A- 3 617 685
- US-A1- 2009 185 899

## Description

### Domaine technique

L'invention a trait au domaine des turbomachines axiales, telles que les moteurs à réaction, plus particulièrement les moteurs à double flux. Plus particulièrement, l'invention a trait au domaine des stators aubagés et secteurs d'aubes statoriques de telles machines. Il peut s'agit du stator aubagé du compresseur, ou d'un des compresseurs, ou encore de la turbine, ou d'une des turbines, d'une telle machine.

### Technique antérieure

Le document de brevet publié EP 2 075 412 A1 divulgue un dispositif de fixation d'aubes statoriques sur une virole d'un étage de stator d'un compresseur de turbomachine axiale. Chacune des aubes comprend une plateforme de fixation et une pale formant la partie aérodynamique de l'aube. La virole comprend une gorge destinée à recevoir les plateformes des aubes. Les plateformes comprennent sur leur face externe une vis ou goujon de fixation. Cette vis est destinée à traverser la paroi de la virole de stator et à coopérer avec un écrou de serrage en vue de la fixation des aubes. Ce mode de fixation impose un montage et un ajustement aube par aube. Il requiert ainsi un certain temps de montage, en particulier pour les turbomachines de grand diamètre et comprenant un nombre élevé d'aubes. De plus, les vis représentent un poids non négligeable.

Le document de brevet publié EP 2 339 120 A1 divulgue un autre dispositif de fixation d'aubes statoriques sur une virole d'un étage de stator d'un compresseur de turbomachine axiale. Les aubes sont assemblées en secteurs sur la virole. Pour ce faire, les aubes centrales d'un secteur sont enfilées radialement au travers d'un segment de plateforme et un segment de virole interne. Des aubes d'extrémités du secteur comprennent, chacune, une plateforme à chaque extrémité selon une direction radiale, lesdites plateformes étant vissées à la virole du stator et à la virole interne. Plus précisément, la plateforme externe d'une de ces aubes est commune à deux secteurs voisins et assure, par sa fixation vissée, la liaison et la fixation des segments de plateforme externes. La plateforme interne assure, elle, la liaison entre deux segments de virole interne voisins. Ce type de montage requiert la réalisation et la mise en place d'un certain nombre de pièces. De plus, les aubes d'extrémités ne sont pas identiques aux aubes centrales. En outre, la rigidité des fixations est limitée compte tenu que seules les aubes d'extrémités assurent une liaison rigide avec la virole de stator. La présence d'une plateforme externe génère également un surpoids.

Le document de brevet publié GB 2 250 782 A divulgue un autre dispositif de fixation d'aubes statoriques sur une virole d'un étage de stator d'un compresseur de turbomachine axiale. Des aubes principales sont formées intégralement avec une virole externe et une virole interne, ces dernières comprenant des encoches entre ces aubes, destinées à recevoir des aubes intermédiaires. Ces aubes intermédiaires peuvent ainsi être réalisées en matériau composite, à l'inverse des aubes principales qui sont en matériau métallique. L'objectif de cet enseignement est de faciliter le remplacement d'aubes en cas d'endommagement. Il impose cependant l'utilisation de deux types d'aubes, similairement à l'enseignement précédent. De plus, la rigidité de l'étage redresseur peut s'avérer limitée compte tenu que seules les aubes principales assurent le maintien de la virole interne et des aubes auxiliaires via ladite virole.

Le document de brevet publié GB 600,057 A divulgue un mode de fixation d'aubes statoriques sur un carter de compresseur, où, dans une même rangée d'aubes, essentiellement une aube sur deux comprend une vis de fixation sur sa plateforme, chacune des autres aubes étant fixée par un engagement entre sa plateforme et les plateformes des deux aubes voisines pourvues chacune d'une vis de fixation. L'engagement entre les plateformes se fait par des épaulements aptes à transmettre les efforts de plaquage des plateformes contre le carter par l'action des vis de fixation à la plateforme de l'aube dépourvue d'une telle vis de fixation. Ce mode de fixation est intéressant en ce qu'il divise environ par deux le nombre de vis de fixation et permet de fixer des aubes à des zones du carter en pouvant pas recevoir de vis ou autres moyens de fixation. Par contre, il requiert des opérations d'assemblages potentiellement fastidieuses lors du positionnement et de la fixation provisoire des aubes dépourvues de vis de fixation, en raison du fait que les aubes sont à monter une à une.

Le document de brevet publié US 2, 772, 069 A divulgue un stator de turbomachine axiale, conforme au préambule de la revendication 1.

### Résumé de l'invention

### Problème technique

L'invention a pour objectif de proposer un mode de fixation d'aubes statoriques qui pallie au moins un des inconvénients de l'état de l'art sus mentionné. Plus particulièrement, l'invention a pour objectif de proposer un mode de fixation qui assure une rigidité satisfaisante tout en étant léger. Plus particulièrement encore, l'invention a pour objectif de proposer un mode de fixation qui soit compatible avec un carter ou une virole de carter pourvu de moyens de fixation du carter ou de la virole qui sont susceptibles d'interférer avec des vis de fixation des aubes, tout en étant facile lors de l'assemblage.

### Solution technique

L'invention a pour objet un stator ou tronçon de stator de turbomachine axiale, préférentiellement de compresseur, selon la revendication 1.

Des développements de l'invention sont selon les revendications dépendantes 2-8.

L'invention a également pour objet une turbomachine axiale comprenant un rotor supportant des aubes rotoriques et un stator ou tronçon de stator supportant des aubes statoriques, remarquable en ce que le stator ou tronçon de stator est conforme à l'invention.

### Avantages apportés

Les mesures de l'invention sont intéressantes en ce qu'elles permettent de réaliser une fixation de résistance et de rigidité satisfaisantes tout en limitant le poids de la fixation et en facilitant la fixation sur un carter présentant sur sa face externe des moyens de liaison de ses éléments qui sont susceptibles d'interférer avec les vis de fixation.

### Brève description des dessins

La figure 1 est une représentation schématique en coupe d'une turbomachine axiale conforme à l'invention.
La figure 2 est une représentation en perspective du stator du compresseur de la turbomachine de la figure 1.
La figure 3 est une vue en coupe transversale du stator de la figure 2.
La figure 4 est une vue en plan d'un premier exemple de secteur d'aubes pour le stator des figures 2 et 3.
La figure 5 est une vue en plan d'un deuxième exemple de secteur d'aubes pour le stator des figures 2 et 3.
La figure 6 est une vue en plan d'un troisième exemple de secteur d'aubes pour le stator des figures 2 et 3.

### Description des modes de réalisation

Dans la description qui va suivre, les termes « intérieur » ou « interne » et « extérieur » ou « externe » renvoient à un positionnement par rapport à l'axe de rotation de la turbomachine axiale.

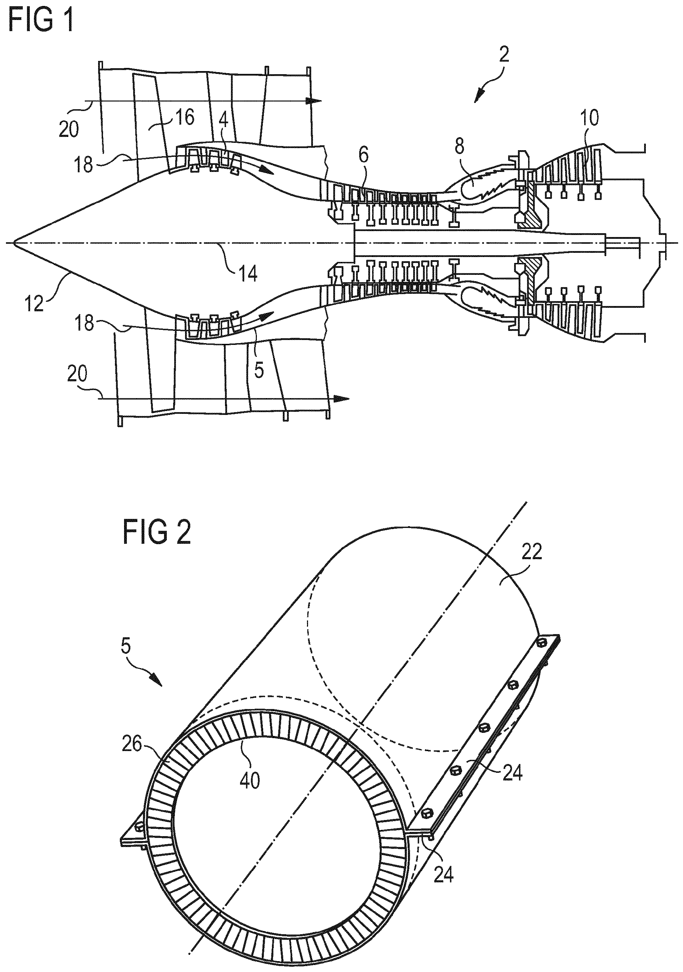

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Alternativement, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter 5 de la turbomachine.

La figure 2 illustre en perspective le carter 5 du compresseur basse-pression 4 de la turbomachine de la figure 1. En l'occurrence, il s'agit d'un carter en matériau composite à matrice organique renforcée de fibres. Le carter 5 est constitué essentiellement de deux parties 22 formant, chacune, une demi-coquille. Chacune de ces parties 22 comprend, à chacun des deux bords d'extrémité circonférentielle une bride de fixation 24. Ces brides de fixation s'étendent essentiellement longitudinalement suivant une direction généralement parallèle à l'axe de rotation de la machine. L'intérêt de cette forme de construction du carter est de permettre son assemblage autour d'un rotor 12 (figure 1) dont les aubes sont intégralement formées avec le rotor. C'est notamment le cas lorsqu'elles sont soudées à des moignons émanant du rotor ou encore lorsqu'elles sont usinées dans la masse du rotor. En effet, lorsque les aubes supportées par le rotor sont intégralement formées avec le rotor, il n'est en principe pas possible de disposer le stator par coulissement axial autour du rotor car les aubes statoriques qui rencontrent les premières le rotor vont buter contre la première rangée d'aubes rotoriques. L'utilisation d'un carter en plusieurs portions formant des secteurs permet un assemblage non plus axial mais essentiellement radial et, partant, évite les problèmes de butée entre aubes rotoriques et statoriques.

A la figure 2, on peut observer la première rangée d'aubes statoriques 26 à l'entrée du stator, ainsi que la virole interne 40 correspondante. Le carter 5 est représenté de sorte à ce que les deux portions 22 s'étendent sur toute sa longueur. Dans la pratique, le carter peut comprendre plusieurs tronçons selon la direction axiale. Il peut ainsi être constitué de plusieurs tronçons formant des viroles, assemblées les uns aux autres, au moins un de ces tronçons pouvant être constitué de plusieurs portions correspondant à des secteurs.

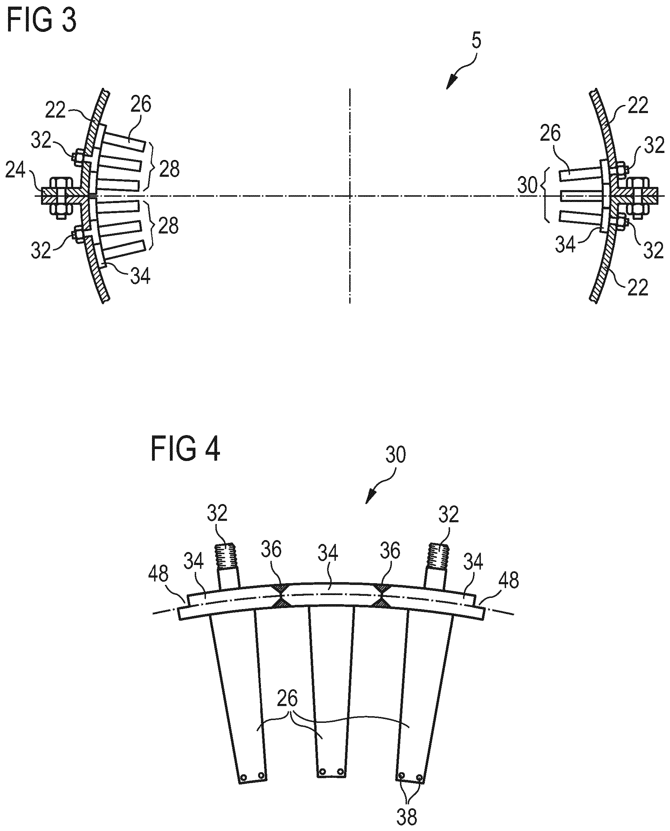

La figure 3 est une vue en coupe transversale du carter 5 de la figure 2, au niveau d'une rangée d'aubes statoriques. Seules les parties du carter au voisinage des brides de fixation 24 ont été représentées.

On peut observer du côté gauche, au niveau des brides de liaison 24 des portions 22 du carter, que deux secteurs 28 de trois aubes 26, chacun, sont disposés de part et d'autre de la jonction entre les deux portions de paroi. Chacun des deux secteurs comprend une vis de fixation 32 sur la plateforme 34 de l'aube centrale, les plateformes des deux aubes latérales étant libres de vis de fixation. Les plateformes sont rigidement reliées entre elles, par exemple par soudage ou brasage. Une telle configuration permet, d'une part, d'avoir une économie de poids en renonçant à deux vis de fixation sur trois, et, d'autre part, d'éviter les problèmes d'accessibilité et de place réduite pour les vis de fixation des aubes qui sont situées à hauteurs des brides de fixation 24.

Le reste de la rangée d'aubes peut être réalisée par la disposition bout-à-bout de secteurs d'aubes 28. D'autres configurations de secteurs sont toutefois envisageables.

Le côté droit de la figure 3 montre une configuration alternative à celle du côté gauche et conforme à l'invention. Un secteur 30, par exemple de trois aubes 26, est disposé à cheval sur la jonction entre les deux portions de paroi 22. Similairement aux secteurs 28 du côté gauche de la figure, les plateformes 34 des aubes sont rigidement liées entre elles, par exemple par soudage ou brasage. Dans le cas du secteur 30, la plateforme de l'aube centrale est libre de vis de fixation alors que celles des aubes latérales ont, chacune, une vis de fixation 32. Similairement à la configuration du côté gauche de la figure, cette configuration permet, d'une part, de procurer une économie de poids en renonçant à une vis de fixation sur trois, et, d'autre part, d'éviter les problèmes d'accessibilité et de place réduite pour la vis de fixation de l'aube centrale située à hauteur des brides de fixation 24.

Le reste de la rangée d'aubes peut être réalisée par la disposition bout-à-bout de secteurs d'aubes 30 ou par une alternance d'un secteur 28 et d'un secteur 30. D'autres configurations de secteurs sont toutefois envisageables.

Lors de l'assemblage du carter 5, les secteurs sont d'abord fixés à chacune des portions 22, ces dernières étant ensuite assemblées l'une à l'autre autour du rotor de la turbomachine. Dans le cas de la configuration du côté gauche de la figure, les bords d'extrémité des secteurs affleurent avec les bords correspondants des portions de paroi 22. Dans le cas de la configuration du côté droit de la figure 3, le secteur 30 destiné à chevaucher la jonction entre les deux portions de paroi 22 est fixé à une des portions, une partie du secteur faisant saillie de la portion de paroi en question. Lors de l'assemblage des deux portions de paroi 22, la partie du secteur faisant saillie est alors mise en place contre la face interne correspondante de l'autre portion de paroi. Une combinaison de mouvements de rapprochement selon une direction essentiellement perpendiculaire aux plans des brides 24 et selon une direction essentiellement parallèle à ces dits plans peut être nécessaire pour permettre l'insertion de la vis de fixation sur la partie de secteur en saillie dans l'orifice correspondant de l'autre portion de paroi.

La figure 4 illustre de manière un peu plus détaillée le secteur 30 de la figure 3. La liaison rigide entre les plateformes 34 est représentée par les soudures 36 sur les deux faces des plateformes, c'est-à-dire les faces interne et externe. Il est intéressant de noter que les extrémités interne des pales 26 des aubes peuvent comprendre des moyens mécaniques de fixation à une virole interne (voir figure 2, référence 40), ces moyens pouvant être des orifices.

Il est intéressant de noter que les bords d'extrémités du secteur 30 peuvent présenter un épaulement 48 apte à former un logement avec la face interne de la paroi de carter. Ces logements sont alors aptes à coopérer avec les bords adjacents correspondants des secteurs voisins, notamment lorsqu'ils correspondent au secteur 28.

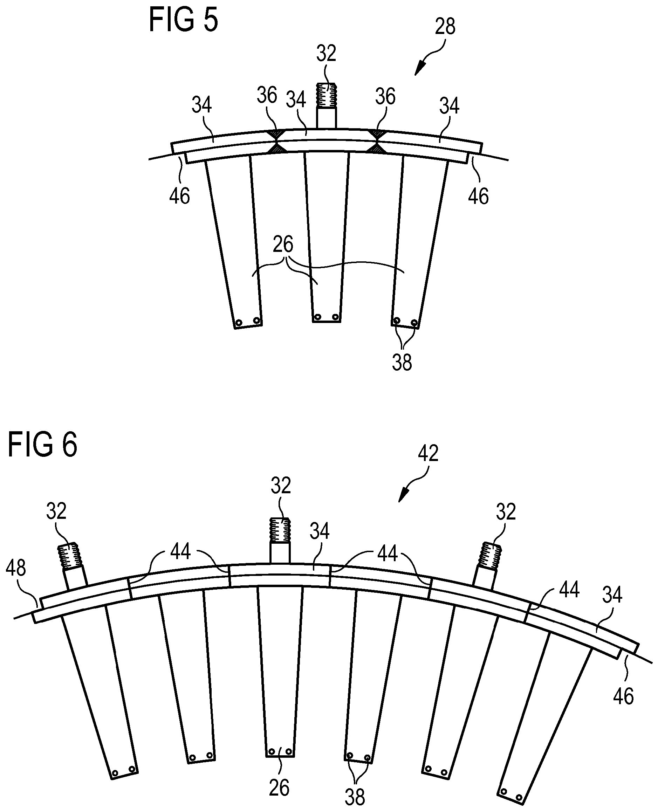

La figure 5 illustre de manière un peu plus détaillée le secteur 28 de la figure 3. La liaison rigide entre les plateformes 34 est représentée par les soudures 36 sur les deux faces des plateformes correspondant aux faces interne et externe.

Les bords d'extrémité du secteur peuvent comprendre des épaulements 46 formant une cavité ouverte vers l'axe de rotation de la machine. Ces épaulements 46 peuvent coopérer avec les épaulements correspondants 48 du secteur 30 (figure 4). Lorsque ces secteurs sont disposés en alternance, les vis de fixation aux extrémités du secteur 30 permettent d'assurer, par effort de pression au niveau de l'engagement de ces épaulements des plateformes aux deux extrémités du secteur 28, une fixation sécurisée des plateformes libres de vis de fixation.

La figure 6 illustre un troisième exemple de secteur d'aubes 42. Il est composé de six aubes avec plateformes disposés en alternance, à savoir que le long du profil courbe du secteur, les plateformes avec vis de fixation et les plateformes sans vis de fixation se succèdent en alternance.

La liaison rigide entre les plateformes 34 est représentée par les brasures 44 entre les faces de contact des plateformes.

Les bords d'extrémité peuvent présenter des épaulements 46 et 48, similairement à ceux des secteurs des figures 4 et 5. Des secteurs 42 peuvent être disposés bout-à-bout le long du profil circulaire de la face interne de la paroi de carter, l'épaulement 48 de chaque secteur mis en place venant en appui sur l'épaulement 46 correspond du secteur précédemment mis en place.

Le secteur 42 de la figure 6 peut présenter un autre nombre d'aubes, comme par exemple deux, quatre ou huit aubes. Il comprend un nombre pair d'aubes, celles-ci étant disposées en alternance, à savoir une avec vis de fixation, suivie d'une autre sans vis de fixation, et ainsi de suite.

De manière générale, les aubes, plus particulièrement les plateformes, les pales aérodynamiques et les vis de fixation sont en matériau métallique, préférentiellement en titane.

## Revendications

1. Stator ou tronçon de stator de turbomachine axiale (2), préférentiellement de compresseur, comprenant un carter (5) formant une paroi généralement circulaire et des aubes statoriques disposées en au moins une rangée annulaire sur la face radialement interne de la paroi, les aubes formant des secteurs (28, 30, 42), la paroi du carter comprenant, suivant sa circonférence, plusieurs portions (22), lesdites portions comprenant à leurs extrémités circonférentielles des brides (24) s'étendant axialement et aptes à coopérer entre elles en vue de la fixation des portions de paroi, **caractérisé en ce qu'**au moins un des secteurs d'aubes statoriques (30) comprend plusieurs aubes avec des plateformes (34) fixées entre elles au niveau de leurs bords adjacents par soudage (36) et/ou brasage (44) de manière à décrire un arc de cercle, et avec une pale (26) en saillie de la face radialement interne de chacune des plateformes (34) et dirigée vers le centre de l'arc de cercle décrit par les plateformes, au moins une des plateformes (34) comprend sur sa face radialement externe une vis de fixation (32) et au moins une autre des plateformes (34) est libre de vis de fixation, le au moins un secteur (30) chevauche une jonction entre deux portions de paroi (22) et est fixé à une des portions (22), et l'aube située circonférentiellement au niveau des brides (24) étant celle dont la plateforme est libre de vis de fixation.

2. Stator ou tronçon de stator selon la revendication 1, **caractérisé en ce que** le secteur d'aubes statoriques (30) comprend trois aubes dont une aube centrale et deux aubes latérales, de part et d'autre de l'aube centrale, la plateforme de l'aube centrale étant la plateforme libre de vis de fixation, les deux plateformes des aubes latérales étant les plateformes avec vis de fixation.

3. Stator ou tronçon de stator selon la revendication 2, **caractérisé en ce qu'**au moins un des bords des plateformes avec vis de fixation, formant une des extrémités circonférentielles du secteur, comprend un épaulement (48) apte à recouvrir un bord adjacent d'un secteur voisin.

4. Stator ou tronçon de stator selon la revendication 1, **caractérisé en ce que** le secteur d'aubes statoriques (42) comprend un nombre pair d'aubes, les aubes avec plateforme avec vis de fixation et les aubes avec plateformes libres de vis de fixation étant disposées en alternance le long du secteur.

5. Stator ou tronçon de stator selon la revendication 4, **caractérisé en ce que** le bord de la plateforme avec vis de fixation formant une des extrémités circonférentielles du secteur comprend un épaulement (48) apte à recouvrir un bord adjacent d'un secteur voisin et/ou le bord de la plateforme libre de vis de fixation formant l'autre des extrémités circonférentielles du secteur comprend un épaulement (46) apte à être recouvert par un bord adjacent d'un secteur voisin.

6. Stator ou tronçon de stator selon l'une des revendications 1 à 5, **caractérisé en ce que** les pales (26) comprennent à leur extrémité radialement interne des moyens de fixation mécanique (38) à une virole interne (40), lesdits moyens comprenant préférentiellement au moins un, préférentiellement deux orifices.

7. Stator ou tronçon de stator selon l'une des revendications 1 à 6, **caractérisé en ce que** la paroi (22) est en matériau composite, préférentiellement à matrice organique et préférentiellement avec des fibres.

8. Turbomachine axiale (2) comprenant un rotor supportant des aubes rotoriques et un stator ou tronçon de stator supportant des aubes statoriques, **caractérisé en ce que** le stator ou tronçon de stator est conforme à l'une des revendications 1 à 7.

## Patentansprüche

1. Ein Stator oder Statorsegment einer axialen Turbomaschine (2), vorzugsweise eines Kompressors, umfassend ein Gehäuse (5), das eine im Allgemeinen kreisförmige Wand bildet, und Statorschaufeln, die in mindestens einer ringförmigen Reihe an der radial inneren Fläche der Wand angeordnet sind, wobei die Schaufeln Sektoren (28, 30, 42) bilden, wobei die Wand des Gehäuses entlang ihres Umfangs mehrere Abschnitte (22) umfasst, wobei die Abschnitte an ihren Umfangsenden Flansche (24) umfassen, die sich axial erstrecken und miteinander zur Befestigung der Wandabschnitte zusammenwirken können, **dadurch gekennzeichnet, dass** mindestens einer der Statorschaufelsektoren (30) mehrere Schaufeln mit Plattformen (34) umfasst, die an ihren angrenzenden Kanten durch Schweißen (36) und/oder Löten (44) so miteinander verbunden sind, dass sie einen Bogen beschreiben, und mit einer Schaufel (26), die von der radial inneren Fläche jeder der Plattformen (34) hervorsteht und zum Zentrum des von den Plattformen beschriebenen Bogens gerichtet ist, wobei mindestens eine der Plattformen (34) an ihrer radial äußeren Fläche eine Befestigungsschraube (32) umfasst und mindestens eine andere der Plattformen (34) keine Befestigungsschrauben aufweist, wobei der mindestens eine Sektor (30) eine Verbindung zwischen zwei Wandabschnitten (22) überlappt und an einem der Abschnitte (22) befestigt ist, und die Schaufel, die sich umfangsmäßig an den Flanschen (24) befindet, diejenige ist, deren Plattform keine Befestigungsschrauben aufweist.

2. Der Stator oder das Statorsegment nach Anspruch 1, **dadurch gekennzeichnet, dass** der Statorschaufelsektor (30) drei Schaufeln umfasst, einschließlich einer mittleren Schaufel und zwei seitlichen Schaufeln, auf beiden Seiten der mittleren Schaufel, wobei die Plattform der mittleren Schaufel die Plattform ohne Befestigungsschrauben ist, die beiden Plattformen der seitlichen Schaufeln die Plattformen mit Befestigungsschrauben sind.

3. Der Stator oder das Statorsegment nach Anspruch 2, **dadurch gekennzeichnet, dass** mindestens eine der Kanten der Plattformen mit Befestigungsschrauben, die eines der Umfangsenden des Sektors bildet, eine Schulter (48) umfasst, die in der Lage ist, eine angrenzende Kante eines benachbarten Sektors zu überdecken.

4. Der Stator oder das Statorsegment nach Anspruch 1, **dadurch gekennzeichnet, dass** der Statorschaufelsektor (42) eine gerade Anzahl von Schaufeln umfasst, wobei die Schaufeln mit Plattformen mit Befestigungsschrauben und die Schaufeln mit Plattformen ohne Befestigungsschrauben abwechselnd entlang des Sektors angeordnet sind.

5. Der Stator oder das Statorsegment nach Anspruch 4, **dadurch gekennzeichnet, dass** die Kante der Plattform mit Befestigungsschrauben, die eines der Umfangsenden des Sektors bildet, eine Schulter (48) umfasst, die in der Lage ist, eine angrenzende Kante eines benachbarten Sektors zu überdecken und/oder die Kante der Plattform ohne Befestigungsschrauben, die das andere der Umfangsenden des Sektors bildet, eine Schulter (46) umfasst, die in der Lage ist, von einer angrenzenden Kante eines benachbarten Sektors überdeckt zu werden.

6. Der Stator oder das Statorsegment nach einem der Ansprüche 1 bis 5, **dadurch gekennzeichnet, dass** die Schaufeln (26) an ihrem radial inneren Ende mechanische Befestigungsmittel (38) an einem inneren Mantel (40) umfassen, wobei die Mittel vorzugsweise mindestens eine, vorzugsweise zwei Öffnungen umfassen.

7. Der Stator oder das Statorsegment nach einem der Ansprüche 1 bis 6, **dadurch gekennzeichnet, dass** die Wand (22) aus Verbundmaterial besteht, vorzugsweise mit einer organischen Matrix und vorzugsweise mit Fasern.

8. Eine axiale Turbomaschine (2), umfassend einen Rotor, der Rotorschaufeln trägt, und einen Stator oder ein Statorsegment, das Statorschaufeln trägt, **dadurch gekennzeichnet, dass** der Stator oder das Statorsegment gemäß einem der Ansprüche 1 bis 7 ist.

## Claims

1. A stator or stator segment of an axial turbomachine (2), preferably a compressor, comprising a casing (5) forming a generally circular wall and stator blades arranged in at least one annular row on the radially inner face of the wall, the blades forming sectors (28, 30, 42), the wall of the casing comprising, along its circumference, several portions (22), said portions comprising at their circumferential ends flanges (24) extending axially and capable of cooperating with each other for fixing the wall portions, **characterized in that** at least one of the stator blade sectors (30) comprises several blades with platforms (34) fixed to each other at their adjacent edges by welding (36) and/or brazing (44) so as to describe an arc, and with a blade (26) projecting from the radially inner face of each of the platforms (34) and directed towards the center of the arc described by the platforms, at least one of the platforms (34) comprises on its radially outer face a fixing screw (32) and at least one other of the platforms (34) is free of fixing screws, the at least one sector (30) overlaps a junction between two wall portions (22) and is fixed to one of the portions (22), and the blade located circumferentially at the flanges (24) being the one whose platform is free of fixing screws.

2. The stator or stator segment according to claim 1, **characterized in that** the stator blade sector (30) comprises three blades including a central blade and two lateral blades, on either side of the central blade, the platform of the central blade being the platform free of fixing screws, the two platforms of the lateral blades being the platforms with fixing screws.

3. The stator or stator segment according to claim 2, **characterized in that** at least one of the edges of the platforms with fixing screws, forming one of the circumferential ends of the sector, comprises a shoulder (48) capable of covering an adjacent edge of a neighboring sector.

4. The stator or stator segment according to claim 1, **characterized in that** the stator blade sector (42) comprises an even number of blades, the blades with platforms with fixing screws and the blades with platforms free of fixing screws being arranged alternately along the sector.

5. The stator or stator segment according to claim 4, **characterized in that** the edge of the platform with fixing screws forming one of the circumferential ends of the sector comprises a shoulder (48) capable of covering an adjacent edge of a neighboring sector and/or the edge of the platform free of fixing screws forming the other of the circumferential ends of the sector comprises a shoulder (46) capable of being covered by an adjacent edge of a neighboring sector.

6. The stator or stator segment according to one of claims 1 to 5, **characterized in that** the blades (26) comprise at their radially inner end mechanical fixing means (38) to an inner shroud (40), said means preferably comprising at least one, preferably two orifices.

7. The stator or stator segment according to one of claims 1 to 6, **characterized in that** the wall (22) is made of composite material, preferably with an organic matrix and preferably with fibers.

8. An axial turbomachine (2) comprising a rotor supporting rotor blades and a stator or stator segment supporting stator blades, **characterized in that** the stator or stator segment is in accordance with one of claims 1 to 7.
